# EUROPÄISCHE PATENTANMELDUNG

(11) **EP 2 559 481 A1**
(43) Veröffentlichungstag der Anmeldung: **20.02.2013**
(21) Anmeldenummer: 11177665.4
(22) Anmeldetag: 16.08.2011
(51) Int. Cl.: B01J 13/16

(54) **Verfahren zur Verkapselung von Substanzen unter Ausbildung der Kapselhülle durch Grenzflächenreaktion im Zentrifugalreaktor**

(71) Anmelder: BASF SE, 67056 Ludwigshafen (DE)
(72) Erfinder: Sachweh, Bernd, 67149 Meckenheim (DE); Mages-Sauter, Caroline, 69469 Weinheim (DE); Engel, Robert, 67346 Speyer (DE); Bauder, Andreas, 68199 Mannheim (DE); Judat, Sonja, 67067 Ludwigshafen (DE); Sowa, Christian, 67435 Neustadt (DE)

(57) **Zusammenfassung**

Verfahren zur Verkapselung von Substanzen, wobei die Kapselwände durch Grenzflächenreaktion erhalten werden, dadurch gekennzeichnet, dass die Grenzflächenreaktion in einem Zentrifugalreaktor mit rotierender Packung durchgeführt wird.

## Beschreibung

Die vorliegende Erfindung betrifft ein Verfahren zur Verkapselung von Substanzen durch Grenzflächenreaktion unter Ausbildung der Kapselhülle in einem Zentrifugalreaktor mit rotierender Packung.

Die Verkapselung von Substanzen durch Reaktionen an einer Grenzfläche ist an sich bekannt.

Dabei wird eine Kernmaterial, die disperse Phase, in einer kontinuierlichen Phase dispergiert. Durch in Kontaktbringen der beiden flüssigen, untereinander nicht mischbaren Phasen, die jeweils die wandbildendenden reaktiven Ausgangsstoffe enthalten, kommt es an der Grenzfläche der Emulsionströpfchen zur chemischen Reaktion unter Ausbildung von polymeren Kapselwänden.

So wird in der WO 03/101606 die Verkapselung von hydrophoben organischen Substanzen in Polyharnstoff-Mikrokapseln durch Grenzflächenpolymerisation beschrieben, wobei eine wässrige Phase enthaltend Di- oder Polyamine und eine mit Wasser nicht mischbare Phase enthaltend Di- oder Polyisocyanate in Kontakt gebracht werden.

In der US 2007/0220686 wird die Mikroverkapselung von Pigmenten in Polyharnstoff- oder Polyurethan-Mikrokapseln durch Grenzflächenpolymerisation beschrieben.

In der US 6,338,838 ist die Herstellung von verkapselten Lichtschutzmitteln beschrieben, wobei die äussere Kapselhülle ebenfalls durch Grenzflächenpolymerisation hergestellt wird.

In der WO 2009/091726 ist die Mikroverkapselung von hydrophoben kosmetischen Substanzen mittels Grenzflächenpolymerisation von Isocyanaten und Aminen unter Bildung von Polyharnstoffen beschrieben.

All diese Produkte werden durch Batchverfahren erhalten. Allerdings sind die Produkteigenschaften hinsichlich einheitlicher Produktqualität wie beispielsweise Verkapselungsraten, Teilchengrößenverteilung oder Stabilität gegen Agglomeration nicht zufriedenstellend. Ein weiterer Nachteil ist, dass das Up-scaling solcher Batch-Verfahren nicht unbegrenzt möglich ist und zudem der Nachteil des diskontinuierlichen Verfahrens besteht.

Zentrifugalreaktoren mit eine rotierenden Packung sind ebenfalls an sich bekannt.

So wird in der US 7,537,644 B2 die Verwendung eines solchen Reaktortyps für die Entgasung von Flüssigkeiten beschrieben. In diesem Dokument wird auf zahlreiche Publikationen betreffend andere Verwendungen dieses Reaktortyps hingewiesen, beispielsweise die Verwendung zur Herstellung von Nanopartikeln aus Calciumcarbonat.

Der vorliegenden Erfindung lag die Aufgabe zugrunde, ein Verfahren zur Verkapselung von Substanzen zu finden, dass die geschilderten Nachteile zu vermeiden hilft, und auf einfache Weise und bei guten Ausbeuten zu verkapselten Produkte mit guten Eigenschaften führt.

Demgemäß wurde ein Verfahren zur Verkapselung von Substanzen, wobei die Kapselwände durch Reaktionen an Grenzflächen erhalten werden, gefunden, welches dadurch gekennzeichnet ist, dass die Grenzflächenreaktion in einem Zentrifugalreaktor mit rotierender Packung durchgeführt wird.

Die Grenzflächenreaktion erfolgt in einem dispersen System aus mindestens zwei nicht miteinander mischbaren Phasen, in dem eine disperse Phase A in einer kontinuierlichen Phase B dispergiert ist. Die nicht miteinander mischbare Phasen sind solche, die bei Vermischung spontan verschiedene Phasen ausbilden.

Gemäß einer Ausführungsform der Erfindung wird eine Emulsion, also ein zweiphasiges System, in dem sowohl die Phase A als auch die Phase B flüssige Phasen darstellen, im Zentrifugalreaktor mit rotierender Packung in Gegenwart einer grenzflächenaktiven Substanz erzeugt.

Gemäß einer Ausführungsform der Erfindung werden eine Phase A, enthaltend ein mit Wasser nicht mischbares organisches Lösungsmittel und einen Ausgangsstoff A, und eine wässrige Phase B, enthaltend einen Ausgangsstoff B, in Gegenwart mindestens einer oberflächenaktiven Substanz und der zu verkapselnden Substanz in eine Emulsion überführt, wobei an der Grenzfläche der Emulsionströpfchen durch chemische Reaktion der Ausgangstoffe A und B die Ausbildung der Kapselwand stattfindet.

Gemäß einer weiteren Ausführungsform wird eine Phase A eingesetzt, die wiederum selbst eine Emulsion eines mit Wasser nicht mischbaren organischen Lösungsmittels in Wasser darstellt, eingesetzt. Die reaktive Ausgangssubstanz A ist dabei in der organischen Phase enthalten. Die Voremulgierung erfolgt in Gegenwart einer grenzflächenaktiven Substanz.

Gemäß einer weiteren Ausführungsform der Erfindung kann die Phase A in Form einer

Erfindungsgemäß kann die Emulsion aus Phase A und Phase B vom Typ einer Öl-in-Wasser-Emulsion oder vom Typ einer Wasser-in-Öl-Emulsion (W/O) sein. Dementsprechend kann die zu verkapselnde Substanz eine hydrophile oder eine hydrophobe Substanz sein. Im Falle der Ausführungsform einer hydrophilen zu verkapselnden Substanz wird eine Wasser-in-Öl-Emulsion erzeugt. Im Falle der Ausführungsform einer hydrophoben zu verkapselnden Substanz wird eine Öl -in- Wasser -Emulsion (O/W) erzeugt. Bevorzugt wird das erfindungsgemäße Verfahren zur Verkapselung von hydrophoben Substanzen eingesetzt. Der Emulsionstyp kann über die Wahl der grenzflächenaktiven Substanz eingestellt werden. Weiterhin kann der Emulsionstyp über da Mengenverhältnis von kontinuierlicher zu disperser Phase eingestellt werden. Auch eine Kombination der genannten Maßnahmen kann zur Steuerung des Emulsionstyps eingesetzt werden.

Unabhängig von der gewählten Ausführungsform sind mit Wasser nicht mischbare organische Lösungsmittel solche Lösungsmittel, die unter Normalbedingungen (bei 20 °C und einem Druck von 0.1 M Pa) bei Kontakt mit Wasser spontan eine separate Phase bilden.

Geeignete nicht Wasser mischbare organische Lösungsmittel sind insbesondere synthetische oder natürliche aromatische oder nicht-aromatische Kohlenwasserstoffe sowie synthetische oder natürliche Öle. Als Öle kommen in Betracht: pflanzliche und tierische Öle, Silikonöle, parrafine, Triglyceride oder ölige Monomere.

Weiterhin eignen sich aromatische Lösungsmittel wie Benzol oder Toluol. Ebenso eignen sich aliphatische Kohlenwasserstoffe wie C₅-C₅₀-Alkane.

Gemäß einer Ausführungsform der Erfindung stellt die durch Grenzflächenreaktion erhaltene Kapselwand ein Polykondensat dar. Als Polykondensate kommen bevorzugt Polyharnstoffe, Polyurethane, Melamin-Formaledhyd-Kondensate, Polyamide oder Polycarbonate in Betracht. Als Polykondensate kommen bevorzugt Polyharnstoffe, Polyurethane oder einem Polycarbonate in Betracht, insbesondere Polyharnstoffe.

Besonders bevorzugt ist die Herstellung von Polyharnstoffen oder Polyurethanen als Wandmaterial für die Mikrokapseln. Dabei wird als Ausgangsstoff A ein di- oder polyfunktionelles Isocyanat eingesetzt. Als Ausgangsstoff B wird eine di- oder polyfunktionelle Verbindung aus der Gruppe der Amine, Hydroxylamine oder Alkohole eingesetzt.

Als Ausgangsstoff A eignen sich insbesondere Diphenylmethanddiisocyanat, polymeres Diphenylmethanddiisocyanat, Toluoldiisocyanat, Isophorondiisocyanat, 1 ,4-Phenylendiisocyanat oder Hexamethyendiisocyanat oder Mischungen davon.

Als Ausgangsstoff B eignen sich zur Herstellung von Polyharnstoffen vor allem C₂-C₆-Alkylendiamine, insbesondere 1,6- Hexamethylendiamin, oder Alkylentriamine wie Diethylentriamin. Der Einsatz von Triaminen empfiehlt sich besonders, wenn höhere Vernetzungsgrade der Kapselwand und weniger permeables Wandmaterial gewünscht wird.

Weiterhin können Polykondensate durch Reaktion von Phosgen oder Säuredichloriden wie Sebacinsäuredichlorid, Terephtalsäuredichlorid oder Phtalsäureldichlorid mit di- oder polyfunktionellen Aminen, Hydroxylaminen oder Alkoholen erhalten werden.

Gemäß allen Ausführungsformen erfolgt die Verkapselung in Gegenwart mindestens einer grenzflächenaktivern Substanz. Als grenzflächenaktive Substanzen eignen sich Tenside oder Emulgatoren. Es können anionische, kationisch oder nicht-ionische Emulgatoren für O/W- und W/O-Emulsionen verwendet werden.

Geeignete Emulgatoren für W/O-Emulsionen können Sorbitan-Fettsäureester, beispielweise Span®-Typen, sein, weiterhin Polysorbate, Fettsäureester von Glycerin, Polyglycerinester, Fettsäureester von Ethylenglykol, Polyethylenglykole, Amin-alkoxylate (beispielsweise Quadrol®),als Emulgatoren geeignete Copolymere oder Blockcopolymere von Polyalkylenoxiden, Polyoxamine oder Polyisobuten-Polyamin-Polymere (beispielsweise Glissopal®).

Als Emulgatoren für O/W-Emulsionen eigen sich beispielsweise Sorbitanester, Glyceride, Polyglycerinester oder Ligninsulfonate.

Weitere geeignete W/O- oder O/W-Emulgatoren sind in "H.P. Fiedler, Lexikon der Hilfsstoffe, Stichwort: HLB-Werte, S. 77-82, Bd.1, 4. Auflage, Editio Cantor Verlag Aulendorf) beschrieben.

Die Emulgatoren können in Mengen von 0,5 bis 10 Gew-%, bezogen auf die disperse Phase, eingesetzt werden. Die Menge der dispersen Phase, bezogen auf die Gesamtmenge der Emulsion, kann 5 bis 60 Gew.-% betragen.

Als Zentrifugalreaktoren können alle an sich bekannten Vorrichtungen dieses Typs, die mit einer rotierenden Packung ausgerüstet sind, verwendet werden. Die Zentrifugalreaktoren werden erfindungsgemäß kontinuierlich betrieben.

Die im Folgenden genannten Bereiche für die Verfahrensparameter finden auf alle genannten Ausführungsformen Anwendung.

Der Zentrifugalreaktor kann bei Drücken von 0,1 MPa bis 3 MPa betrieben werden.

Die Zentrifugalbeschleunigungen liegen im Bereich von 500 bis 2000 g , bevorzugt 800 bis1500 g [m/s²].

Die Temperatur im Zentrifugalreaktor kann im Bereich von 0 bis 150 °C, bevorzugt 5 bis 70°C liegen.

Die Parameter werden kumulativ angewendet, das heisst, die Grenzflächenreaktion kann bei Drücken von 0.1 MPa bis 3 MPa und Zentrifugalbeschleunigungen von 500 bis 2000 g und Temperaturen von 0 bis 150°C durchgeführt werden. Die jeweiligen Vorzugsbereiche sind untereinander frei kombinierbar.

Die Durchflussgeschwindigkeiten im Zentrifugalreaktor können 1 L/min bis 1000 L/min betragen.

Als rotierende Packung kann ein beispielsweise ein Gewebegitter eingesetzt werden, dass aus Metall, Keramik oder einem textilen Gewebe bestehen. Die Gewebegitter können Maschenweiten im Bereich von 0,5 bis 10 mm aufweisen.

Das erfindungsgemäße Verfahren eignet sich zur Herstellung von Mikrokapseln, die als zu verkapselnde Substanz eine biologisch aktive Substanz enthalten. Als biologisch aktive Substanzen kommen pharmazeutische oder kosmetische Substanzen oder Agrochemikalien in Betracht.

Weiterhin eignet sich das Verfahren auch zur Verkapselung von anorganischen Substanzen wie Calicumnitrat oder Eisenoxid für die Anwendung als Betoninhaltsstoffe. Ebenso können anorganische oder organische Pigmente mikroverkapselt werden.

### Beispiel

### Herstellung von Mikrokapseln in einer O/W-Emulsion

Zusammensetzung:

Angaben in Gew.-% bezogen auf die Gesamtmenge von Vorlage 1 und 2

### Vorlage 1

19, 5 Gew.-% Solvesso 200 (aromatisches Lösungsmmitttel-Leichtöl, Siedebereich 220-290 °C)
12 Gew.-5 Lupranat® M20S (4,4'-Diphenylmethandiisocyanat)
40 gew.-% Wasser
1,63 Gew.-% Ligninsulfonsäure
1,87 Gew.-% Atlas G5000 (nichtionisches Tensid, HLB 17, Polyalkylenoxid-Blockcopolymer)

### Vorlage 2

24,5 Gew.-% Wasser
0,5 Gew.-% Hexamethylendiamin

Packungsmaterial: textiles Gewebe, Maschenweite 2 mm
Sprühlanzen: 5 Bohrungen mit einem Durchmesser von 1 mm
Drehzahl der rotierenden Packung: 5000 U/min
Durchmesser der Reaktortrommel: 160 mm
Durchmesser der rotierenden Packung: 107 mm
Packungsdicke: 56 mm
Durchflussgeschwindigkeit im Bereich von 0,8 L/h

Die Komponenten in Vorlage 1 wurden mittels eines Schrägblattrührers oder einem Ultra-Turrax voremulgiert. Anschließend wurden die Substanzen aus beiden Vorlagebehältern zeitgleich über die Sprühlanzen auf die rotierende Packung gesprüht. In der Packung fand eine Fein- Emulgierung der Tropfen und die Bildung der Kapseln durch die Reaktion zwischen Isocyanat und Amin statt. Nach der Kapselbildung wurde die Suspension für 3,5 h bei 55°C leicht gerührt, um die gebildeten Kapseln vollständig auszuhärten. Die erhaltenen Mikrokapseln wiesen mittlere Teilchengrößen, (d(0,5), Volumenmittel) von 2.05 µm auf.

## Patentansprüche

1. Verfahren zur Verkapselung von Substanzen, wobei die Kapselwände durch Grenzflächenreaktion erhalten werden, **dadurch gekennzeichnet, dass** die Grenzflächenreaktion in einem Zentrifugalreaktor mit rotierender Packung durchgeführt wird.

2. Verfahren nach Anspruch 1, **dadurch gekennzeichnet, dass** eine Phase A, enthaltend ein mit Wasser nicht mischbares organisches Lösungsmittel und einen Ausgangsstoff A, und eine wässrige Phase B, enthaltend einen Ausgangsstoff B, in Gegenwart mindestens einer oberflächenaktiven Substanz und der zu verkapselnden Substanz in eine Emulsion überführt werden, wobei an der Grenzfläche der Emulsionströpfchen durch chemische Reaktion der Ausgangstoffe A und B die Ausbildung der Kapselwand stattfindet.

3. Verfahren nach einem der Ansprüche 1 oder 2, **dadurch gekennzeichnet, dass** als rotierende Packung ein Gewebegitter eingesetzt wird.

4. Verfahren nach einem der Ansprüche 1 bis 3, **dadurch gekennzeichnet, dass** die Packung mit einer Zentrifugalbeschleunigung von 500 g bis 5000 g rotiert

5. Verfahren nach einem der Ansprüche 1 bis 4, **dadurch gekennzeichnet, dass** der Zentrifugalreaktor bei Drücken von0, 1 bis 3 MPa betrieben wird

6. Verfahren nach einem der Ansprüche 1 bis 5, **dadurch gekennzeichnet, dass** die Durchflussgeschwindigkeit im Zentrifugalreaktor 1 L/min bis 1000 L/min beträgt.

7. Verfahren nach einem der Ansprüche 1 bis 6, **dadurch gekennzeichnet, dass** die Temperatur im Zentrifugalreaktor im Bereich von 0 bis 100 °C liegt.

8. Verfahren nach einem der Ansprüche 2 bis 7, **dadurch gekennzeichnet, dass** die Emulsion aus Phase A und Phase B eine Öl-in-Wasser oder eine Wasser-in-Öl-Emulsion darstellt.

9. Verfahren nach einem der Ansprüche 1 bis 8, **dadurch gekennzeichnet, dass** die zu verkapselnde Substanz eine hydrophile oder eine hydrophobe Substanz darstellt.

10. Verfahren nach einem der Ansprüche 2 bis 9, **dadurch gekennzeichnet, dass** die Phase A eine Emulsion eines mit Wasser nicht mischbaren organischen Lösungsmittels in Wasser darstellt

11. Verfahren nach einem der Ansprüche 2 bis 10, **dadurch gekennzeichnet, dass** als organisches Lösungsmittel der Phase A ein aromatisches Lösungsmittel oder ein Leichtöl eingesetzt wird

12. Verfahren nach einem der Ansprüche 1 bis 11, **dadurch gekennzeichnet, dass** die durch Grenzflächenreaktion erhaltene Kapselwand ein Polykondensat darstellt.

13. Verfahren nach einem der Ansprüche 1 bis 12, **dadurch gekennzeichnet, dass** die durch Grenzflächenreaktion erhaltene Kapselwand aus einem Polyharnstoff, einem Polyurethan, einem Polyamid oder einem Polycarbonat besteht.

14. Verfahren nach einem der Ansprüche 2 bis 13, **dadurch gekennzeichnet, dass** als Ausgangsstoff A ein di- oder polyfunktionelles Isocyanat eingesetzt wird

15. Verfahren nach einem der Ansprüche 2 bis 14, **dadurch gekennzeichnet, dass** als Ausgangsstoff B eine di- oder polyfunktionelle Verbindung aus der Gruppe der Amine, Hydroxylamine oder Alkohole eingesetzt wird.

16. Verfahren nach einem der Ansprüche 2 bis 15, **dadurch gekennzeichnet, dass** als Ausgangsstoff A Diphenylmethanddiisocyanat, polymeres Diphenylmethanddiisocyanat, Toluoldiisocyanat, Isophorondiisocyanat, 1,4-Phenylendiisocyanat oder Hexamethyendiisocyanat eingesetzt wird.

17. Verfahren nach einem der Ansprüche 2 bis 16, **dadurch gekennzeichnet, dass** als Ausgangsstoff B C₂-C₆-Alkylendiamine eingesetzt wird.

18. Verfahren nach einem der Ansprüche 2 bis 17, **dadurch gekennzeichnet, dass** als grenzflächenaktive Substanz mindestens ein Tensid oder Emulgator eingesetzt wird.

19. Verfahren nach einem der Ansprüche 2 bis 17, **dadurch gekennzeichnet, dass** als grenzflächenaktive Substanz eine Ligninsulfonsäure oder Polyalkylenoxidblockcopolymere oder Mischungen davon eingesetzt werden.

20. Verfahren nach einem der Ansprüche 1 bis 17, **dadurch gekennzeichnet, dass** als zu verkapselnde Substanzen Bauchemikalien eingesetzt werden.

21. Verfahren nach einem der Ansprüche 1 bis 18, **dadurch gekennzeichnet, dass** als zu verkapselnde Substanz eine biologisch aktive Substanz eingesetzt wird.
